(19)

Europäisches
Patentamt
European
Patent Office
Office européen
des brevets

(11)  **EP 3 738 939 A1**

(12)  **EUROPEAN PATENT APPLICATION**

(43) Date of publication:
     **18.11.2020  Bulletin 2020/47**

(51) Int Cl.:
     **C04B 7/44** (2006.01)

(21) Application number: **19175135.3**

(22) Date of filing: **17.05.2019**

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**
     Designated Extension States:
     **BA ME**
     Designated Validation States:
     **KH MA MD TN**

(71) Applicant: **HeidelbergCement AG**
     **69120 Heidelberg (DE)**

(72) Inventors:
     • **Bech, Claus**
       **1410 Waterloo (BE)**

     • **Dienemann, Wolfgang**
       **69256 Mauer (DE)**
     • **Rosani, Diego**
       **22100 Como (IT)**
     • **Majchrowicz, Marek**
       **PL-47-143 Olszowa (PL)**

(74) Representative: **Zellentin & Partner mbB**
     **Patentanwälte**
     **Rubensstrasse 30**
     **67061 Ludwigshafen (DE)**

(54)  **METHOD FOR CALCINING RAW MEAL FOR CEMENT CLINKER MANUFACTURING**

(57)  Method for calcining limestone or raw meal containing limestone for manufacturing cement clinker, wherein microwave energy is used for calcination, device for calcining limestone or raw meal containing limestone for manufacturing cement clinker, comprising a preheater (2) and a calciner reactor (6), wherein the preheater (2) recieves heated waste gas from the calciner reactor (6) and a feed comprising the limestone or raw meal, the heated waste gas and the feed pass through the preheater (2) in countercurrent, thereby transferring heat from the waste gas to the feed providing a preheated feed, means for transferring the preheated feed into the calciner reactor (6), and at least one magnetron (7) arranged in the calciner reactor (6) for calcination of the preheated feed by microwave energy to provide a calcined feed, cement plant comprising the device, storage means for the calcined feed (4), a kiln preheater string (3), and a rotary kiln (8), wherein the kiln preheater string (3) is arranged in parallel to the calciner preheater string (2), wherein means are provided for passing preheated limestone or raw meal containing limestone from the the kiln preheater string (3) into the calciner reactor (6), means are provided for passing preheated and calcined material from the calciner reactor (6) to the rotary kiln (8) and to the storage means (4), and means are provided for passing calcined material from the storage means (4) to the calciner preheater string (2) and to the kiln preheater string (3), as well as use of microwave energy for calcining limestone or a raw meal containing limestone for cement clinker production.

Fig. 1

**Description**

The present invention relates to a method for calcining raw meal for cement clinker manufacturing in a conventional, burner heated rotary kiln. The invention also relates to a device for calcining limestone and a cement plant with a calciner reactor for calcining raw meal with microwave energy and to the use of microwaves for calcining raw meal for cement clinker manufacturing.

Today most cement is manufactured by burning a feed from finely ground raw materials (raw meal) in a rotary kiln which is heated by burning fuel. A typical cement plant comprises a feed preparation section, where raw materials are ground, if needed dried, and mixed; a clinker production section, where the feed is preheated, burnt to produce clinker and the clinker cooled; as well as a cement production section where clinker is ground, possibly mixed with other components and clinker and/or cement stored. To optimize the process it is usual to use hot gas from the clinker production section for drying raw material and/or fuel needed in the clinker production section. Also dust collected from grinding and separated from exhaust gas is recycled into the process.

The production of clinker is an energy-intense process, which requires high temperatures in the order of 1450°C and high air volumes for combustion and heat transport (typically in the range of 1000 $Nm^3$/t clinker). The raw meal is fed into the preheater and kiln system at ambient temperature and is progressively heated till it reaches the sintering zone where the main chemical reactions take place and clinker is formed. The heated exhaust gas flows in countercurrent and leaves the system from the stack. Modern preheater and kiln systems optimize heat exchange in the process, however gas exit temperatures range typically between 250 and 450 °C, depending on preheater and kiln design. This means considerable heat is wasted from the burning process, not to mention the amount dispersed by irradiation from the kiln tube and other sections of the system. In times where global warming is under the magnification lens of scientists and politicians, maximum recovery of heat is a must and a target for any industrial process.

The first part of the clinker production system is a preheater, where the raw meal feed is heated from ambient temperature to calcination temperature, i.e. to 800 - 1000 °C, typically 850 to 900 °C. It is generally accepted that the best heat exchange takes place in a gas suspension. Therefore, preheaters are usually designed as cyclone preheaters. In such devices hot exhaust gases from the kiln and the raw meal feed are introduced at opposite ends. During the countercurrent passage heat is exchanged in each cyclone, cooled gas leaving at the top and heated raw meal at the bottom.

While some calcination always occurs in the preheater, the main calcination can take place in the preheater and/or in the rotary kiln. When calcination in the preheater is desired an additional heating is needed. Usually, this heating is made by burning fuel (e.g. natural and/or alternative, solid and/or liquid fuel) with hot air from the clinker cooler, usually a grate clinker cooler, so called tertiary air, for combustion. With this supplemental combustion heat input to the calciner, the calcination takes place. Calcination requires usually 60 % of the overall heat input.

The preheated and optionally calcined feed is then passed into the rotary kiln to burn it and thereby form clinker. The material is carried through the kiln by gravity, through inclination of the kiln tube and rotation. In case calcination takes place in the kiln, this occurs in the first part of the kiln. The heat required for burning and for calcination, if applicable, is generated by fuel combustion in a burner located near the lower end of the kiln. In the part of the kiln beyond the burner the clinker already cools down. The main cooling takes place in the cooler, usually a grate cooler, where entering air is heated while cooling the clinker and the heated air is subsequently used for combustion of the fuel in the burner. A part of the heated air may also be withdrawn and used for other steps like combustion of the fuel for calcination in the preheater or drying of raw material or of fuel.

The opportunity to recover waste heat for autonomous production of electricity is being considered. But the impact on process complexity is considerable and the benefit questionable, therefore.

According to general opinion the cement production process is responsible for 5 to 7 % of all man-made $CO_2$ emissions. Although $CO_2$ is not the most harmful greenhouse gas (GHG), it is the most abundant in the atmosphere and therefore the main responsible for the effects on the environment and global warming. The cement industry is since decades striving to reduce its environmental footprint and actively searching for effective measures to reduce its $CO_2$ emissions. Good results have been achieved after implementation of measures to improve efficiency of the process, modernization of plants, reduction of the clinker content in cement and by maximizing the use of alternative fuels. However, the mentioned initiatives inevitably come to a plateau which is hard to overcome.

One important or maybe the most important point is the use of limestone (calcium carbonate) as the main raw material, which is inevitable for most kinds of cement, and therewith the associated emissions. 1 ton of pure limestone contains 440 kg $CO_2$, which is released during the burning process, i.e. calcination, at elevated temperatures. In addition, use of fossil fuels such as coal and oil as a source of heat bring along $CO_2$ and $H_2O$ as main by-products of the combustion. In sum, each ton of Portland cement clinker produced in a rotary kiln is associated with about 810 kg $CO_2$ emitted from the stack. Approximately 60 % of this is related to $CO_2$ from mineral raw material, 40 % to fuel combustion. The manufacturing of other cements like alumina cement or calcium sulfoaluminate cement also needs CaO usually provided by limestone. Suitable alternative raw materials are not available in sufficient quantity and using less suitable ones requires a pretreatment that consumes the savings achieved. Thus, other ways to cope with the $CO_2$ have to be found.

Recently, efforts have concentrated on $CO_2$ management, by the so-called CCS/CCU (Carbon Capture & Storage/Utilization). The purpose is to capture $CO_2$ from the process and store it permanently or reuse it in other production processes. There is however a problem caused by the need of concentrating and purifying $CO_2$ from exhaust gas. This also contains certain amounts of sulphur oxides and nitrogen oxides coming from combustion of fuels in the presence of air, plus a series of minor components and foreign elements. It has been tried to overcome this problem with a separation of the limestone calcination step, where the calcium carbonate decomposes into calcium oxide and carbon dioxide, from clinker burning and the application of indirect heating. This apporach avoids mixing emissions coming from fuels with those originating from de-carbonation of limestone. However, indirect heating is a complex and less efficient process. Further, in addition to the more or less pure waste gas from calcination there still is the exhaust gas generated by the indirect heating. Thus, this could not solve the problem.

Use of microwave is contemplated in cement industry, see e.g. N. Makul et al., "Applications of microwave energy in cement and concrete - A review", Renewable and Sustainable energy Reviews 37 (2014), 715-733, and A. Buttress et al., "Microwave processing of cement and concrete materials - towards an industrial reality?", Concrete Research 68 (2015), 112-123, and the literature cited therein. But no document suggests calcination by microwave combined with separating the calcination step from the clinker burning step using conventional heating for the latter. To the contrary, if conventional heating is combined with microwave it is used for preheating.

Surprisingly it was now found that a solution for the abovementioned challenges is provided by a decoupling of the clinker burning step from calcination combined with the use of microwave energy for calcination. Decoupling of the process entails the separation of the calcination phase from the burning process, considering them as separate steps, not necessarily bound into a continuous process flow. With this in mind, calcination can be carried out in a calciner reactor designed to accommodate microwave energy to heat the raw meal to the necessary temperature (800 to 1000°C) and release the $CO_2$ bound as carbonate. Burning the calcined feed to obtain clinker is achieved in a conventional rotary kiln heated by burning fuel.

The above mentioned problems can therefore be solved by a method for calcining limestone or raw meal containing limestone for manufacturing cement clinker, wherein the microwave energy is used for calcination. The objects are further achieved by a device for calcining limestone or raw meal containing limestone for manufacturing cement clinker, comprising a preheater and a calciner reactor, wherein the preheater recieves heated waste gas from the calciner reactor and a feed comprising limestone or raw meal, the heated waste gas and the feed pass through the preheater in countercurrent, thereby transferring heat from the waste gas to the feed, and preheated feed is transferred into the calciner reactor equipped with at least one magnetron for calcination of the feed by microwave energy.

Advantages of the method according to the invention are:

- very low contaminated $CO_2$ is produced by this calcination process, which can easily be cleaned and compressed
- the volume of produced $CO_2$ in calcination is reduced to the amount generated from mineral carbonates
- complex and costly indirect heating systems are avoided.

Additionally, the invention provides the potential advantage to absorb energy (including energy generated by renewable sources) for calcination whenever available and even during kiln stops. Thus, the potential of energy storage in cement production can be maximized by calcination of raw meal. Calcination can be carried out completely separate from the burning by grinding and calcining raw meal to be stored in high capacity silos and to be fed to the kiln according to need. Therefore, the invention also provides an effective way of energy storage. It was already normal practice in cement plants to take advantage of excess electricity supply during off-peak hours. Grinding of raw meal and cement normally take place during night or weekends, where cost of power is lower and availability is higher. But possible storage through this practice reaches a plateau which is not possible to step over when the necessary volumes are produced, but not all extra energy supply has been consumed.

The cement clinker made according to the invention is a calcium containing clinker, usually a calcium silicate clinker like Portland Cement clinker. Additionally it can be calcium sulphoaluminate cement clinkers or belite ye'elemite ferrite cement clinkers.

In the method according to the invention the cement plant is in principle the same as in the prior art, apart from the use of microwave energy for calcination and the addition of a silo (or other storage means) for calcined limestone or raw meal containing limestone. Microwave calcining technology can be applied to existing calciner preheater kilns as well as to preheater kilns by adding the calciner reactor with preheater system. Microwave calciner technology can be used with any type of rotary kiln. Thus, the plant usually comprises the known raw meal preparation section, an adapted preheater (mostly a cyclone preheater) and rotary kiln system with a cooler, and the known clinker processing section.

The raw meal preparation as such will not substantially differ from conventional production. Typical and mostly used raw materials include limestone, marl, clay, silica carriers, iron carriers and alumina carriers and possibly other corrective ingredients. These are provided and ground, if needed dried, and usually stored combined or separately in silos for use. Alternative raw materials can also be used.

The preheater and kiln system (clinker production section) will contain the same units (preheater, calciner, kiln tube, clinker cooler) as known systems but with their sizes and functions adjusted to use microwave calcination.

It is generally accepted that the best heat exchange takes place in a gas suspension. Therefore, preheaters are ususally designed as cyclone preheaters. In such devices hot exhaust gases, usually from the kiln, and raw material feed are introduced at opposite ends. During the countercurrent passage heat is exchanged in each cyclone, cooled gas leaving at the top and heated raw material at the bottom. This approach is preferably kept according to the invention.

More preferably, according to the invention there are two preheater strings, preferably cyclone preheater strings, working as known for heat exchange. One, designated kiln preheater, is connected to the kiln tube and utilizing heat from the kiln exhaust gas. The other preheater string, designated calciner preheater, is completely separate from the kiln and the heat exchange takes place with the waste gas from the microwave calciner where only $CO_2$ is generated. Thereby, waste gas from the calciner preheater is carbon dioxide with very low contamination which is suitable for many uses. If a very minor false inflow adds some air this is not problematic. The number of heat exchange stages, preferably cyclones, can be the same or different in the two strings. In one embodiment, the calciner preheater string comprises only one cyclone, whereas the kiln preheater string comprises the usual three to five cyclones.

According to the prior art calcination of limestone is accomplished in the preheater or in the kiln, usually most of the calcination occurs in a combined preheater and calciner cyclone string and calcination is completed in the kiln. When a cyclone preheater is used for calcination an additional burner is installed in the cyclone utilized as calciner. Application of microwave eliminates a calcination with heat from combustion and allows to significantly reduce the size of the equipment since primary gas that is generated in the calciner will only be $CO_2$. No (or an insignificant amount of) nitrogen is present. In contrast, nitrogen is a significant part (about 50 % of the volume) of exhaust gas from a prior art preheater and kiln system.

Often the $CO_2$ from the microwave calciner is insufficient to generate enough lifting forces for the raw meal feed in case the preferred system design with two preheater strings is used. Thus, advantageously part of the waste gas from calcination is recirculated in the calciner preheater string. The gas for recirculation is preferably withdrawn after the process fan (ID-fan). The amount of recirculated gas is adapted to the size of the preheater cyclones connected to the calciner. Typically, per kg of clinker from 0.1 to 0.25 $Nm^3$ of $CO_2$ from calcination and from 0.2 to 0.6 $Nm^3$ of recirculated gas are required. The amount of recirculated gas will depend on cyclone design and its dedusting efficiency with given gas flow. The typical amount of gas leaving a prior art calciner string is about 0.8 - 1 $Nm^3$ per kg of clinker.

The device design according to the invention also reduces heat losses that take place in the prior art preheater systems, thereby additionally reducing the overall heat/energy consumption of the clinker production section.

In a classic (i.e. presently used) calciner the hot tertiary air (recuperated heat from the cooler) is used for fuel combustion in the calciner. Application of microwave technology eliminates combustion in the calciner, thus, there is no use of recuperated heat in calcining. This seeming disadvantage can be avoided, since this cooler waste air (which is bigger than from prior art kiln design) can advantageously be used for raw material drying. Presently, the kiln exhaust gas obtained from the cyclone preheater string is normally used for drying raw materials during their preparation process. If microwave technology is applied, the total gas volume from both kiln preheater string and calciner preheater string is much reduced due to the absence of combustion in the calciner which is usually responsible for 60 % of overall heat consumption. Such reduced hot gas volume available for the drying process is compensated by using the cooler waste air which is increased and not needed for calcination anymore.

An additional benefit from the separate calcining process by microwave is related to the primary fuel preparation (drying and grinding). First of all, if primary fuel is used, its quantity is reduced proportionally by 60 % and the related fuel drying and grinding installation is proportionally smaller in the investment. Second, the preheater waste gas from the microwave calciner string will contain almost pure $CO_2$, i.e. inert gas, that is perfectly safe to be used for e.g. coal grinding. Present cement plants also use gas from the preheater for drying and grinding but the oxygen level increases on the way from the preheater connection to the coal grinding installation to such an extent that sometimes its content is very close to the dangerous zone enabling explosion. Additional installations for inertisation of the grinding atmosphere are then required.

The microwave calciner with its calciner preheater string can also be connected to a $CO_2$ capture installation which will work much more efficiently due to the very high purity of the incoming gas. The energy for absorption and desorption of $CO_2$ needed in prior art approaches for capturing $CO_2$ is saved.

According to the invention, the raw materials are premixed and ground to desired quality in a maner known as such. Therein, the raw meal (feed) can be preheated by using the heat from the calcination process. A mechanical device (e.g. bucket elevator) transports the feed into the entrance of the top (dedusting) cyclone. The raw meal can be split between the kiln cyclone preheater string and the calciner cyclone preheater string by a mechanical splitter. Advantageously, the split is adjusted in relation to available heat from both strings. The raw meal will drop into the gas stream that is transported upwards by an induced draft fan (ID-fan) located after (with respect to gas flow) the cyclone preheater string.

During its mix of co-current and counter-current flow the feed is preheated and ready to be passed into the calciner reactor. Usually, the preheated raw meal is at a temperature from 600 to 850 °C, preferably from 720 to 820 °C.

In the calciner reactor the material is mixed with the $CO_2$ stream and exposed to the microwave energy. Once the calcination process is complete, the feed is discharged into the calcined raw meal silo and/or directly to the conventional rotary kiln to produce cement clinker. Of course, it is possible to use two, three or more calcined clinker raw meal silos and/or other storage means. Typically, the calcined material is passed into one or more cyclones of the preheater, preferably into the bottom cyclone of the calciner preheater, and dedusted before being discharged into the calcined material silo or passed into the kiln. Usually, 70 to 98 % by weigth of the limestone in the material fed to the calciner reactor are calcined, preferably 90 to 95 % by weigth.

According to the invention microwave energy is used as a heat source for calcination of the cement clinker raw meal. Preferably, microwaves are applied to the ground raw meal, not only to limestone. This makes the process more effective than heating limestone separately, since the dielectric properties of pure limestone are unfavourable. However, in spite of the unfavourable dielectric properties for $CaCO_3$, the process can also be applied to the limestone only. Generally, efficiency can be improved by pre-heating the material before subjecting it to microwave heating. When limestone is calcined separately, the required other raw meal components to form the feed are added either before or to the storage or as the material enters the kiln. In this case it can be beneficial to provide a separate kiln feed bin.

The specific design of the microwave unit is adapted to the required energy input. A typical magnetron has nominal capacity of at least 1 kW, emitting microwaves at ISM frequency band, usually either 915 MHz or 2.45 GHz. Other capacities and/or frequencies can of course also be used. The number of magnetrons depends on reactor size and amount of raw meal feed. Typically, a significant number of magnetrons is required which are preferably installed along the entire volume of the calcination reactor. The energy supply has to make sure the material is heated to calcination temperature, typically 850 - 900 °C. A minimum distance between magnetrons/units is applied to assure proper installation of power supply wires and, if required, a cooling system. The calcination reactor is preferably made of steel with openings to place the magnetrons working surface in. The whole reactor is typically lined with high alumina refractories also with openings for the magnetrons.

According to A. Buttress, mentioned before, "The two key elements that describe the behaviour of a dielectric material in a microwave field are the dielectric constant and loss factor. They are related by Eq.1:

$$\varepsilon^* = \varepsilon' - j\ \varepsilon''$$

where $\varepsilon^*$ is the complex relative permittivity (or complex dielectric constant); $\varepsilon'$ is the relative permittivity (or dielectric constant); $\varepsilon''$ is the dielectric loss factor; and j is $\sqrt{-1}$. The real part of the dielectric constant ($\varepsilon'$) represents the ability of a material to be polarised by an external electric field and is essentially a measure of the ability of charges and dipoles in a material to store energy. The imaginary part or dielectric loss factor is a measure of the material's ability to convert this polarisation energy into heat."

Accordingly, a microwave enhancing effect is expected, which can reduce the calcination temperature by up to 100 °C. This is also due to the presence of finely ground and distributed $Fe_2O_3$ in the feed, which will act as a susceptor, so that more rapid and efficient heating occurs.

The invention allows the calcination process to take place when electricity is cheap and/or in excess (e.g. wind, sun, or tide generated electricity readily available or during the night or other times with low demand). The calcined raw meal can be stored in large capacity silos. Based on its actual temperature the calcined raw meal is returned to the top or any lower stage cyclone of both preheater cyclones to be used (if desired along with fresh meal) for the clinkering process. Silos and other storage means are preferably thermally well isolated so that the calcined raw meal maintains a high temperature and feeding to "lower" cyclone(s) is suitable. Of course, if the temperature dropped too much for whichever reason the calcined raw meal is fed to "higher" or the top cyclone(s).

The benefits of the microwave treatment can be best exploited when a combined heating approach as described herein is applied. Thereby conventional preheating of the feed by means of (kiln) exhaust gases is installed till the raw meal is heated to temperatures close to that required for the calcination process.

It is also possible to provide a microwave calcination together with a single preheater string, preferably cyclone preheater string, with or without circulating $CO_2$. In this embodiment the $CO_2$ concentration effect and associated advantages are not obtained, or are at least much less. When only one cyclone preheater string is used, the calciner reactor should be arranged before the last cyclone. Thereby, preheated feed from the last but one cyclone enters the reactor and calcined feed from the reactor enters the last cyclone. The gas exiting the preheater string contains more $CO_2$ and less fuel burning exhaust gas, since calcination produces "pure" $CO_2$. However, the kiln exhaust gas adds nitrogen and pollutants such as $NO_x$ produced in the kiln burner.

The invention is illustrated further with reference to the attached figures, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

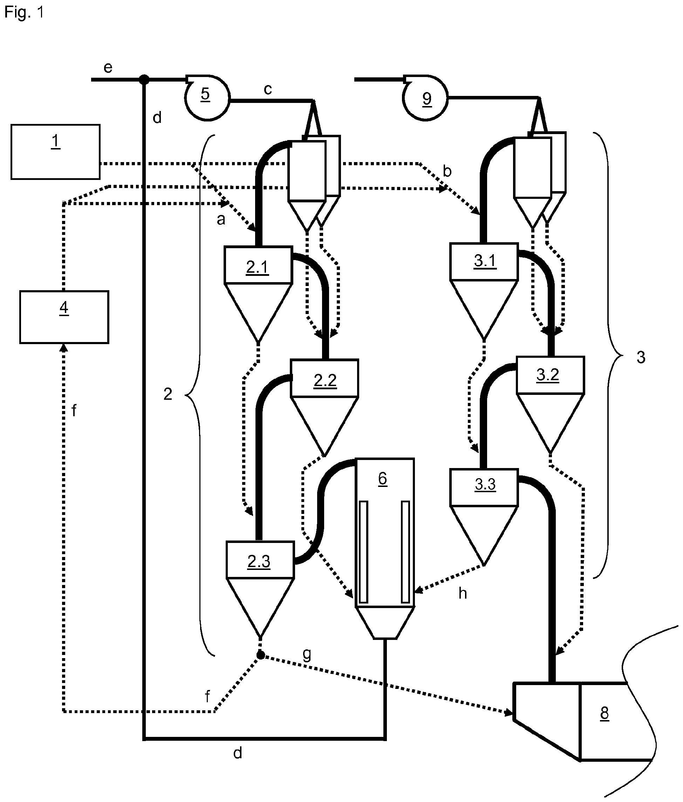

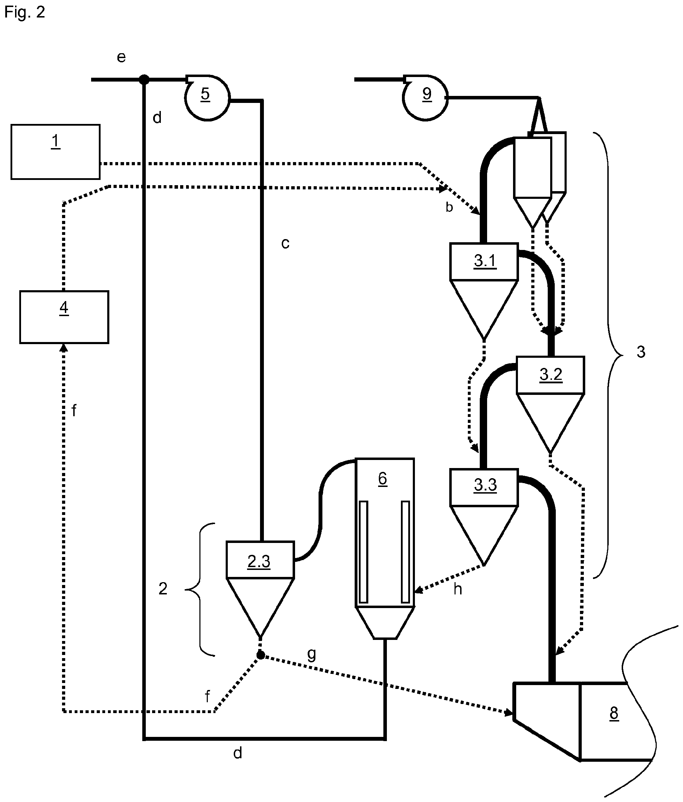

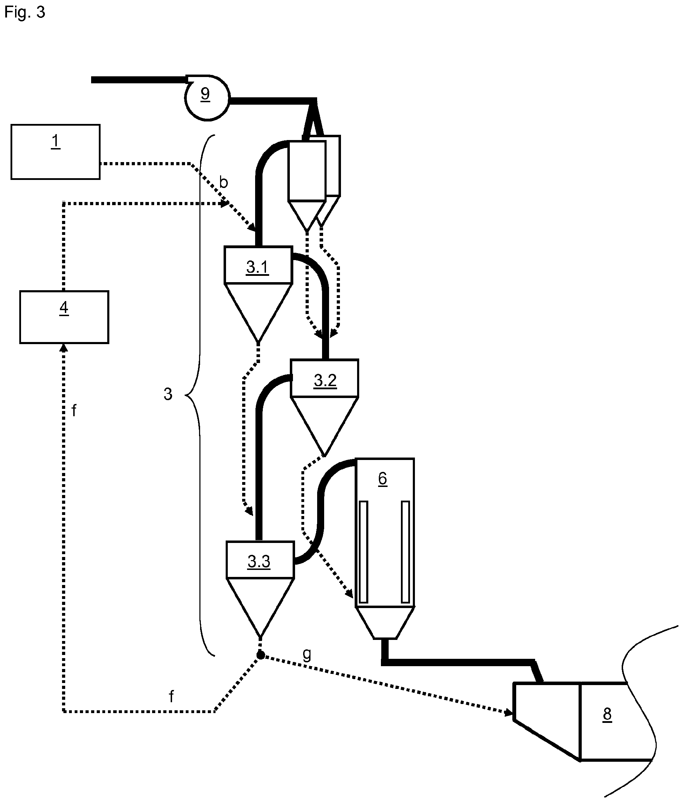

Figure 1 shows one embodiment of a device according to the invention and the material/gas flow streams. Material streams are illustrated as broken lines, gas streams as solid lines. Fig. 2 shows a second and Fig. 3 a third embodiment.

Raw material input and devices like preheating, grinding, storage are not shown. Prepared raw meal is typically stored in a silo 1, but can of course also come directly from the grinding. It is transported via lines a and b to the calciner preheater string, here calcination cyclone string 2, and/or the kiln preheater string, here kiln cyclone string 3, respectively, as selected according to available heat in the string 3, available electric energy and available calcined raw meal in silo 4. Both strings are shown to comprise three cyclones designated 2.1, 2.2, 2.3 and 3.1, 3.2, 3.3 respectively, from top to bottom plus two upper ones not assigned a reference number. In the preheater strings gas flows from bottom to top and solids are added to the flowing gas thereby being transported with the gas stream to the cyclone above. In each cyclone solids sink to the lower end. Typically, most or all raw meal will enter the calciner preheater string 2 via line a. Concurrently, calciner waste gas withdrawn at the top of calciner cyclone string 2 via line c is recirculated into the string 2 via line d and/or discharged from the system via line e. A fan 5 provides the necessary draught for this. Inside calciner cyclone string 2 the raw meal is preheated by the calciner waste gas generated by calcination and augmented by recirculation, while the waste gas cools. Preheated raw meal enters the calciner reactor 6 where it is calcined by microwave energy from the magnetrons 7. Here two sets are shown, in practice the number of magnetrons 7 will be selected based on most economically efficient power capacity of each magnetron unit. All calcined raw meal is transported to the last (bottom) cyclone 2.3 in string 2 with the waste gas. Discharge of this last cyclone 2.3 can be split, allowing transfer of the calcined raw meal into the calcined raw meal silo 4 via line f and to the rotary kiln 8 via line g. Burning of clinker and subsequent steps take place as known, the clinker cooler etc. are not shown. The rotary kiln is only partly shown. In the figure, calcined raw meal from the silo 4 is shown to be fed to the top cyclones. As mentioned before, if a usual well isolated silo 4 is used, the temperature of the calcined raw meal will typically not drop significantly during storage. Then, the calcined raw meal can also be fed to lower cyclones or even directly to the kiln.

Raw meal, possibly together with calcined raw meal from silo 4, entering the kiln cyclone string 3 is preheated with exhaust gas from the rotary kiln 8 flowing in counter current through string 3. A fan 9 provides the necessary draught. Exhaust gas drawn by fan 9 can be discharged or made useful in any manner known as such from prior art cement plants. Material output from the last, bottom cyclone 3.3 of string 3 is fed to the calciner reactor 6 via line h.

The embodiment in figure 2 is similar to that in figure 1, but it contains a calciner preheater string 2 with only one cyclone 2.3. Thus, all raw material from the silo 1 (or the mill) enters the kiln preheater string 3 for preheating. Preheated feed is passed into the calciner reactor 6 for calcining. The feed travels through the calciner reactor 6 by $CO_2$ recirculated with the help of fan 5. Calcined feed is passed into the calciner cyclone 2.3 and from there can be fed to the kiln 8 and/or the silo 4 according to need. This embodiment can more easily be integrated into existing plants. Furthermore, it is possible to combine the cyclone 2.3 and the calciner reactor 6 with a gas distribution and recirculation into one device.

In figure 3 an embodiment with only one cyclone preheater string is shown. Here the calciner reactor is arranged between cyclone 3.2 and cyclone 3.3 facilitating integration into existing plants even more.

Reference numbers

[0046]

1 raw meal silo
2 calciner preheater string
2x lowest/bottom cyclone calciner string
3 kiln preheater string
3x lowest/bottom cyclone kiln preheater string
4 calcined raw meal silo
5 fan
6 calciner reactor
7 magnetron
8 rotary kiln
9 fan
a raw meal feed line to calciner preheater string

b raw meal feed line to kiln preheater string

c waste gas withdraw line from calciner preheater string

d waste gas recirculation line to calciner reactor

e waste gas discharge line

f line transferring calcined raw meal to calcined raw meal silo

g line transferring calcined raw meal to rotary kiln

h line passing preheated raw meal from the kiln preheater string to the calciner reactor

**Claims**

1. Method for calcining limestone or raw meal containing limestone for manufacturing calcium oxides containing cement clinker in a rotary kiln, wherein microwave energy is used for calcination of the limestone or raw meal containing limestone.

2. Method according to claim 1, wherein the cement clinker is Portland cement clinker.

3. Method according to claim 1 or 2, wherein the limestone or raw meal containing limestone is preheated in a cyclone preheater.

4. Method according to anyone of claims 1 to 3, wherein the limestone or raw meal containing limestone is divided into a first and second stream, the first stream is preheated in a calciner preheater string and the second stream is preheated in a kiln preheater string, wherein waste gas from the calcination is passed into the calciner preheater string and exhaust gas from the rotary kiln is passed into the kiln preheater string.

5. Method according to claim 4, wherein a part of the waste gas from the calciner preheater string is recirculated into the calcination.

6. Method according to claim 5, wherein from 0.1 to 0.25 Nm$^3$ carbon dioxide per kg of cement clinker produced by calcination is passed into the first preheater string and from 0.2 to 0.6 Nm$^3$ waste gas from the calciner preheater string per kg of cement clinker is recirculated into the calcination.

7. Method according to one of claims 4 to 6, wherein waste gas from the first preheater is used for drying fuel for the rotary kiln.

8. Method according to anyone of claims 1 to 7, wherein limestone, raw meal and/or fuel is/are dried with hot air generated during cooling the cement clinker.

9. Method according to anyone of claims 1 to 8, wherein carbon dioxide released as waste gas during calcination is captured.

10. Method according to anyone of claims 1 to 9, wherein calcination is carried out during times when electric energy demand is lower than electric energy production so that more calcined limestome or calcined raw meal from raw meal containing limestone is produced than fed to the rotary kiln and the surplus is stored to augment the produced calcined limestome or calcined raw meal from raw meal containing limestone fed to the rotary kiln or to replace it during times when electric energy demand matches electric energy production.

11. Device for calcining limestone or raw meal containing limestone for cement clinker production in a rotary kiln, the device comprising

- a calciner preheater string (2) and a calciner reactor (6), wherein the preheater (2) recieves heated waste gas from the calciner reactor (6) and a feed comprising limestone or raw meal containing limestone,
- means for passing the heated waste gas and the feed through the preheater string (2) in countercurrent, thereby transferring heat from the heated waste gas to the feed and providing a preheated feed,
- means for transferring the preheated feed into the calciner reactor (6), and
- at least one magnetron (7) arranged in the calciner reactor (6) for calcination of the preheated feed by microwave energy to provide a calcined feed.

12. Cement plant comprising a device according to claim 11, storage means for the calcined feed (4), a kiln preheater string (3), and a rotary kiln (8), wherein the kiln preheater string (3) is arranged in parallel to the calciner preheater string (2), wherein

- means are provided for passing preheated limestone or raw meal containing limestone from the the kiln preheater string (3) into the calciner reactor (6),
- means are provided for passing preheated and calcined material from the calciner reactor (6) to the rotary kiln (8) and to the storage means (4), and
- means are provided for passing calcined material from the storage means (4) to the calciner preheater string (2) and to the kiln preheater string (3).

13. Cement plant according to claim 12, wherein the calciner preheater string (2) and the kiln preheater string (3) are cyclone preheater strings.

**14.** Use of microwave energy for calcining limestone or a raw meal containing limestone for cement clinker production.

Fig. 1

Fig. 2

Fig. 3

Europäisches
Patentamt

European
Patent Office

Office européen
des brevets

# EUROPEAN SEARCH REPORT

Application Number

EP 19 17 5135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/178271 A1 (VALDIVIA GERARDO [US]) 26 June 2014 (2014-06-26) | 1,2,10, 11,14 | INV. C04B7/44 |
| Y | * paragraphs [0005], [0021]; figure 1 * | 3-9,12, 13 | |
| X | US 2019/135690 A1 (SÁNCHEZ DOLADO JORGE [ES] ET AL) 9 May 2019 (2019-05-09) * the whole document * | 14 | |
| Y | US 4 561 842 A (NIELSEN PETER B [DK]) 31 December 1985 (1985-12-31) * column 5; figures 1-3 * | 3-9,12, 13 | |

TECHNICAL FIELDS
SEARCHED (IPC)

C04B

The present search report has been drawn up for all claims

| Place of search | Date of completion of the search | Examiner |
|---|---|---|
| Munich | 10 September 2019 | Roesky, Rainer |

EPO FORM 1503 03.82 (P04C01)

**EP 3 738 939 A1**

## ANNEX TO THE EUROPEAN SEARCH REPORT
## ON EUROPEAN PATENT APPLICATION NO.

EP 19 17 5135

10-09-2019

| Patent document cited in search report | | Publication date | Patent family member(s) | | Publication date |
|---|---|---|---|---|---|
| US 2014178271 | A1 | 26-06-2014 | NONE | | |
| US 2019135690 | A1 | 09-05-2019 | CA | 3027039 A1 | 14-12-2017 |
| | | | CO | 2018013712 A2 | 08-03-2019 |
| | | | EP | 3255021 A1 | 13-12-2017 |
| | | | US | 2019135690 A1 | 09-05-2019 |
| | | | WO | 2017211902 A1 | 14-12-2017 |
| US 4561842 | A | 31-12-1985 | AU | 563609 B2 | 16-07-1987 |
| | | | BR | 8304599 A | 24-04-1984 |
| | | | CA | 1212230 A | 07-10-1986 |
| | | | DE | 3362188 D1 | 27-03-1986 |
| | | | DK | 392682 A | 03-03-1984 |
| | | | EG | 15977 A | 30-12-1986 |
| | | | EP | 0103423 A1 | 21-03-1984 |
| | | | ES | 8500087 A1 | 01-10-1984 |
| | | | GR | 78937 B | 02-10-1984 |
| | | | IE | 55487 B1 | 26-09-1990 |
| | | | IN | 158543 B | 06-12-1986 |
| | | | JP | H0380536 B2 | 25-12-1991 |
| | | | JP | S5962337 A | 09-04-1984 |
| | | | MX | 156820 A | 05-10-1988 |
| | | | PT | 77253 A | 01-09-1983 |
| | | | US | 4561842 A | 31-12-1985 |
| | | | ZA | 8304871 B | 28-03-1984 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. MAKUL et al.** Applications of microwave energy in cement and concrete - A review. *Renewable and Sustainable energy Reviews,* 2014, vol. 37, 715-733

- **A. BUTTRESS et al.** Microwave processing of cement and concrete materials - towards an industrial reality?. *Concrete Research,* 2015, vol. 68, 112-123